Europäisches Patentamt

European Patent Office

Office européen des brevets

(19)

(11) Numéro de publication: **0 057 647**
**A1**

# (12) DEMANDE DE BREVET EUROPEEN

(21) Numéro de dépôt: **82400179.6**

(22) Date de dépôt: **04.02.82**

(51) Int. Cl.³: **B 60 Q 1/52**

(30) Priorité: **04.02.81 FR 8102288**
**29.12.81 FR 8124552**

(43) Date de publication de la demande: **11.08.82**
**Bulletin 82/32**

(84) Etats contractants désignés: **AT BE CH DE GB IT LI LU NL SE**

(71) Demandeur: **Coustols, Charles, Jean, Adrien, 397 bis, Route de Saint-Simon Cristal Résidence Bât.F, F-31300 Toulouse (FR)**

(72) Inventeur: **Coustols, Charles, Jean, Adrien, 397 bis, Route de Saint-Simon Cristal Résidence Bât.F, F-31300 Toulouse (FR)**

(74) Mandataire: **Morelle, Guy Georges Alain, Cabinet SCOPI 1, Avenue de Rangueil, F-31400 Toulouse (FR)**

(54) **Appareil de signalisation individuelle, à fonctionnement automatique ou manuel destiné à être placé sur un véhicule.**

(57) L'invention concerne un appareil de signalisation (II) destiné à être placé sur un véhicule et constitué d'un boîtier 1 contenant un produit pouvant être évacué sous l'action de moyens de commande pour se dégager sous la forme d'un nuage de couleur vive destiné à la signalisation.

Cet appareil est remarquable en ce que d'une part, le susdit produit est un fumigène de couleur orange retenu dans une cartouche interchangeable 2 et d'autre part, les susdits moyens de commande d'évacuation dudit fumigène sont constitués par un allumeur 4 associé à la cartouche 2 et dont le système de percussion est déclenché mécaniquement sous l'effet du déplacement (flèche $F_3$) d'une masse mobile 12 guidée dans une gaine 13 ou sous l'effet d'une traction exercée (flèche $F_1$) par un câble 7 relié à son extrémité opposée à un organe de préhension manuelle placé à portée de main du conducteur du véhicule.

EP 0 057 647 A1

APPAREIL DE SIGNALISATION INDIVIDUELLE, A FONCTIONNEMENT
AUTOMATIQUE OU MANUEL DESTINE A ETRE PLACE SUR UN VEHICULE

L'invention concerne un appareil de signalisation individuelle destiné à être placé sur un véhicule et du type de ceux constitués d'un boîtier contenant un produit pouvant être évacué sous l'action de moyens de commande pour se dégager sous la forme d'un nuage de couleur vive destiné à la visualisation.

L'appareil selon l'invention est plus particulièrement utile pour la localisation des véhicules automobiles immobilisés à la suite d'un accident, d'une panne, etc..., et en un endroit mal situé (virage, haut de côte,...) ce qui peut causer des conséquences dommageables à tout autre véhicule pouvant survenir rapidement. A cet effet, le susdit produit est constitué d'un fumigène de couleur orange retenu dans une cartouche interchangeable et présentant le grand avantage d'être non toxique, non polluant, non incendiaire (la durée d'émission du fumigène est de l'ordre de quatre à cinq minutes).

Un autre but de l'invention est d'assurer à l'appareil un fonctionnement aussi bien manuel (actionné par le conducteur conscient) qu'automatique (actionné lorsque le conducteur est inconscient à la suite d'un choc violent subi par le véhicule). A cet effet, les moyens de commande d'évacuation du fumigène orange sont constitués par un allumeur associé à la cartouche interchangeable et dont le système de percussion est déclenché mécaniquement sous l'effet d'une masse mobile guidée ou sous l'effet d'une traction exercée par un organe à commande manuelle.

Les autres caractéristiques et les autres avantages de la présente invention apparaîtront plus clairement à la lecture de la description détaillée qui suit de deux exemples de réalisation concrète, choisis pour illustrer les concepts fondamentaux de l'invention mais nullement limitatifs de ses nombreusese variantes de réalisation et d'application. Cette description est annexée de dessins sur lesquels :

La figure 1 est une vue en coupe longitudinale d'un premier mode de réalisation d'un appareil conforme à l'invention,

La figure 2 est une vue en coupe longitudinale d'une second mode de réalisation d'un appareil conforme à l'invention.

0057647

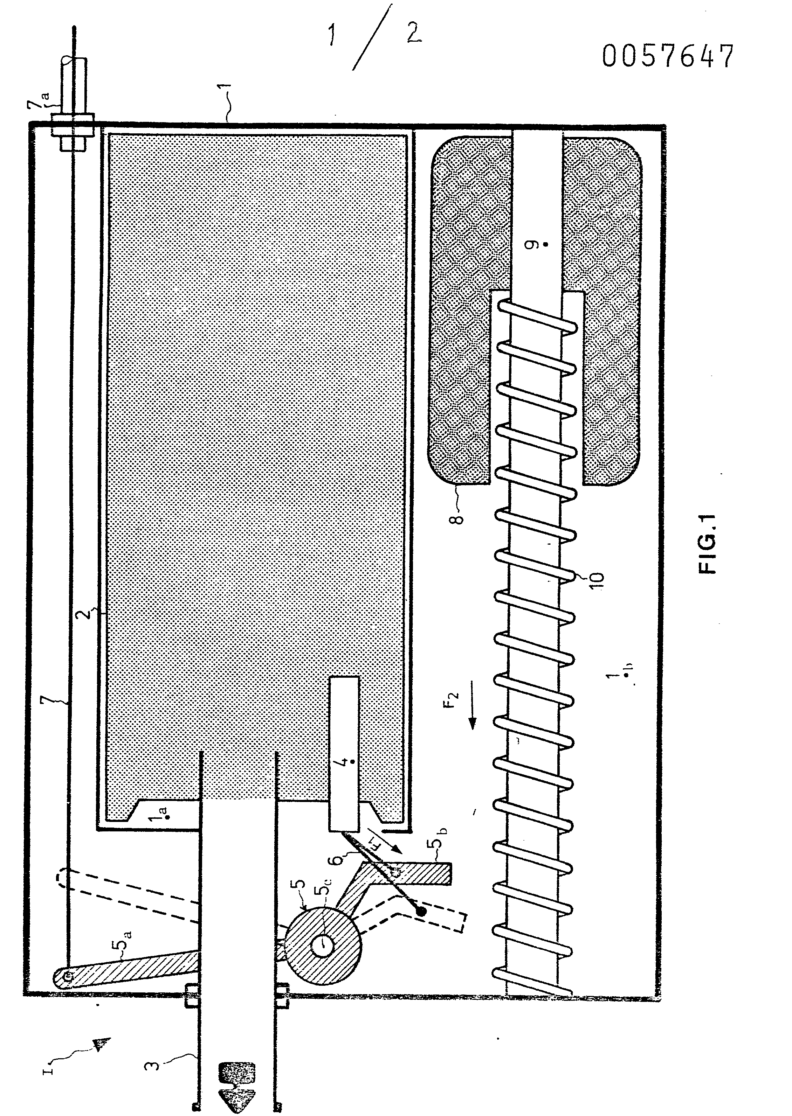

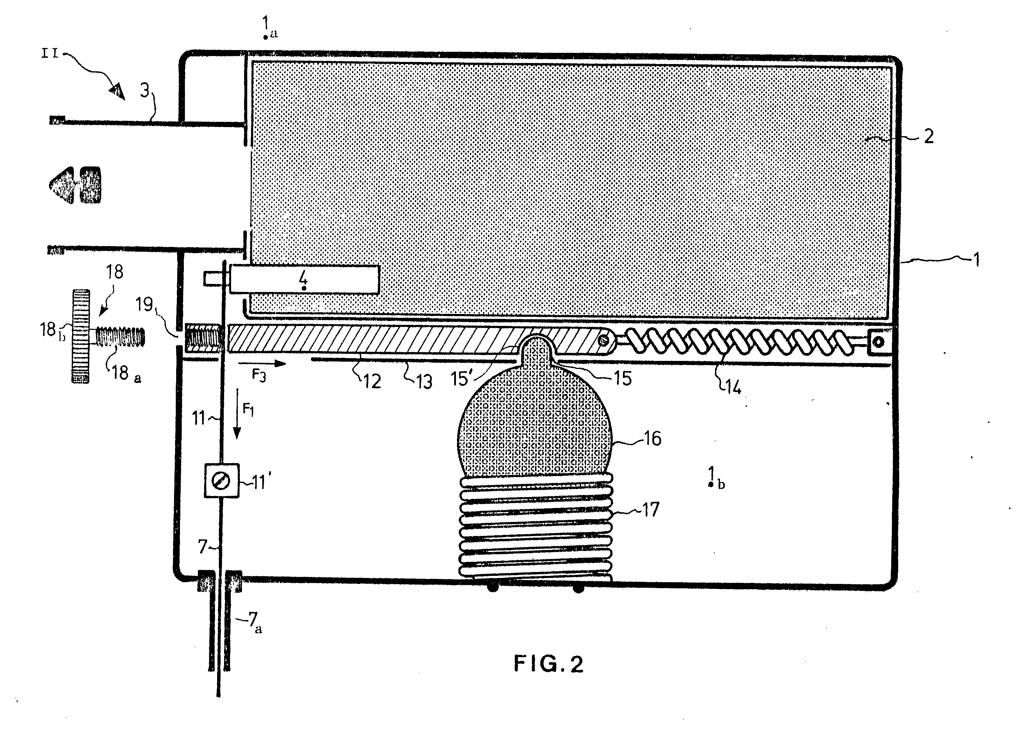

Les appareils I et II, illustrés respectivement aux figures 1 et 2, se présentent chacun sous la forme d'un boîtier métallique de forme parallélépipèdique 1, solidaire du châssis d'un véhicule automobile au moyen de pattes de fixation appropriées et compartimenté en deux logements $1_a$ et $1_b$.

Le premier logement $1_a$ reçoit une cartouche interchangeable 2 remplie d'un fumigène de couleur orange qui se dégage vers l'extérieur du véhicule (ce dégagement est canalisé par un manchon de sortie 3 prolongeant le boîtier 1) sous l'effet d'une déflagration provoquée par un allumeur 4 dont le système de percussion (goupille) est déclenché mécaniquement par traction au moyen d'un dispositif à fonctionnement manuel et automatique installé dans le deuxième logement $1_b$.

Dans l'appareil I, ce dispositif à fonctionnement manuel et automatique comprend un levier 5 à deux bras $5_a$ et $5_b$ et pivotant autour d'un axe $5_c$. Le bras de levier $5_b$ est relié à l'allumeur 4 par une pièce 6 de sorte que, lorsque ledit bras est amené à une position où il est représenté en pointillés, une traction (flèche $F_1$) s'exerce sur le système de percussion de cet allumeur 4 par l'intermédiaire de cette pièce 6 et provoque la déflagration d'une charge explosive contenue dans la cartouche 2. Le pivotement du levier 5 autour de son axe $5_c$, de sa position au repos (traits pleins) à sa position de déclenchement (pointillés) est obtenue de deux manières.

La première est manuelle et s'opère au moyen d'un câble 7 dont une extrémité est reliée au bras du levier $5_a$ et l'autre, sortant du boîtier 1 au moyen d'une gaine $7_a$, est reliée à un organe de préhension manuelle placé à portée de main du conducteur du véhicule.

La deuxième manière est automatique et s'opère au moyen d'une masse mobile 8 se déplaçant parallèlement à l'axe longitudinal de la cartouche 2 le long d'une rampe de guidage 9 qui la traverse et autour de laquelle un ressort 10 travaillant en compression s'oppose au déplacement de ladite masse en direction du bras de levier $5_b$ contre lequel elle prend appui. Ainsi, lors d'un choc violent subi par le véhicule et l'appareil I y associé la force d'inertie créée entraîne une poussée (flèche $F_2$) de la masse 8 jouant le rôle de masselotte contre le bras de levier $5_b$ qui passe dans la position de déclenchement. La position de repos est rétablie par la présence du ressort 10 qui, après avoir été comprimé, revient à sa position initiale.

Dans l'appareil II, le dispositif de déclenchement mécanique du système de percussion de l'allumeur 4 comprend un câble 11 faisant office de goupille et en liaison d'une part, au moyen d'un serre-câble 11' avec l'extrémité du câble 7 relié à l'organe de préhension manuelle et d'autre part, avec l'extrémité d'une masse 12 qu'il traverse, mobile à l'intérieur d'une gaine de guidage 13 disposée parallèlement à l'axe longitudinal de la cartouche 2.

Cette masse 12 travaille en traction (flèche $F_3$) avec un ressort de rappel 14 installé dans la gaine 13 et maintenu dans une position allongée au moyen d'un ergot de blocage 15, de préférence arrondie, s'engageant perpendiculairement à la gaine 13 qu'il traverse, à l'intérieur d'un évidement 15' pratiqué dans la masse 12 pour le recevoir. Selon une caractéristique particulièrement avantageuse de l'invention, l'ergot 15 est solidaire d'une masselotte sphérique 16 reposant sur un ressort à boudin 17 fixé au boîtier 1 et dont le diamètre des spires est inférieur à celui de la sphère de la masselotte 16.

Comme pour l'appareil I, le déclenchement du système de percussion de l'allumeur 4 s'opère par une traction (flèche $F_1$) excercée sur le câble 11 et obtenue soit manuellement par le câble 7 et son organe de préhension, soit automatiquement par le déplacement de la masse mobile 12 dans le sens de la flèche $F_3$.

Le déplacement $F_3$ de la masse 12 est obtenue par la force de rappel du ressort 14 qui, lorsque l'ergot 15 se dégage de son évidement 15', revient de sa position allongée à une position de repos. Le dégagement de l'ergot 15 de son évidement 15', est provoqué lors d'un déplacement de la masselotte sphérique 16 sur son ressort 17 dont la pression est calculée pour ne libérer la masselotte que lorsque celle-ci est soumise à une certaine force d'inertie en relation avec l'intensité d'un choc et le poids de la masselotte.

Selon une caractéristique particulièrement avantageuse de l'invention, l'appareil II comprend une vis de blocage 18 dont la tige filetée $18_a$ disposée dans l'axe de la masse 12 est destinée à être vissée dans l'extrémité de cette dernière dans laquelle est engagé le câble 11, et dont la tête moletée $18_b$ prend appui sur la face extérieure du boîtier 1 pourvu d'une lumière 19 assurant le passage de la tige filetée $18_a$. On comprend alors que cette vis 18 bloque le dispositif de déclenchement mécanique du système de percussion de l'allumeur 4 en immobilisant le câble 11 à l'intérieur de la masse mobile 12. Cette disposition permet ainsi d'éviter un déclenchement intempestif lors de la pose et/ou de la dépose de l'appareil II dans le véhicule ou lors du remplacement de la cartouche 2.

REVENDICATIONS

1. Appareil de signalisation individuelle destiné à être placé sur un véhicule et constitué d'un boîtier contenant un produit pouvant être évacué sous l'action de moyens de commande pour se dégager sous la forme d'un nuage de couleur vive destiné à la signalisation, CARACTERISE PAR LE FAIT QUE d'une part, le susdit produit est un fumigène de couleur orange retenu dans une cartouche interchangeable et d'autre part, les susdits moyens de commande d'évacuation dudit fumigène sont constitués par un allumeur associé à ladite cartouche et dont le système de percussion est déclenché mécaniquement sous l'effet du déplacement d'une masse mobile guidée ou sous l'effet d'une traction excercée par un organe à commande manuelle.

2. Appareil selon la revendication 1, CARACTERISE PAR LE FAIT QUE le déclenchement mécanique du système de percussion est assuré par un levier sur lequel agit d'une part, la poussée de la susdite masse mobile guidée et, d'autre part la traction excercée par le susdit organe à commande manuelle.

3. Appareil selon la revendication 1, CARACTERISE PAR LE FAIT QUE le déclenchement mécanique du système de percussion est assuré par un câble faisant office de goupille et en liaison d'une part avec l'extrémité de la susdite masse mobile et d'autre part, avec l'organe à commande manuelle.

4. Appareil selon la revendication 1, CARACTERISE PAR LE FAIT QUE le susdit boîtier est compartimenté en deux logements dont l'un reçoit la cartouche interchangeable et l'autre le dispositif de déclenchement mécanique du système de percussion et, PAR LE FAIT QUE le premier logement est prolongé d'un manchon de sortie du fumigène contenu dans la susdite cartouche interchangeable.

5. Appareil selon les revendications 1 et 2 ou 3, CARACTERISE PAR LE FAIT QUE la susdite masse mobile se déplace perpendiculairement au câble ou au levier de déclenchement de l'allumeur à l'intérieur d'un élément de guidage parallèle à l'axe longitudinal de la susdite cartouche et est ramené à sa position initiale par un ressort.

6. Appareil selon les revendications 1 et 2 ou 3, CARACTERISE PAR LE FAIT QUE le susdit organe à commande manuelle est constitué d'un câble dont une extrémité est reliée au premier câble ou au levier de déclenchement de l'allumeur et l'autre extrémité à un organe de préhension manuelle.

7. Appareil selon les revendications 1, 2 et 5, CARACTERISE PAR LE FAIT QUE la susdite masse mobile se déplace le long d'une rampe de guidage qui la traverse et autour de laquelle est enroulé un ressort de compression s'opposant au déplacement de ladite masse en direction dudit levier.

8. Appareil selon les revendications 1, 3 et 5, CARACTERISE PAR LE FAIT QUE la susdite masse mobile se déplace à l'intérieur d'une gaine de guidage,

0057647

travaille en traction avec un ressort de rappel installé dans ladite gaine et est maintenu dans une position où ledit ressort est allongé, au moyen d'un ergot de blocage de forme arrondie s'engageant, perpendiculairement à la gaine de guidage qu'il traverse, à l'intérieur d'un évidement pratiqué dans ladite masse pour le recevoir.

9. Appareil selon les revendications 4 et 8, CARACTERISE PAR LE FAIT QUE le susdit ergot est solidaire d'une masselotte de forme sphérique et reposant sur un ressort à boudin fixé au boîtier de l'appareil et dont le diamètre des spires est inférieur à celui de la sphère de la masselotte.

10. Appareil selon les revendications 4 et 8, CARACTERISE PAR LE FAIT QU'il comprend une vis de blocage dont la tige filetée, disposée dans l'axe de la masse mobile est destinée à être vissée dans l'extrémité de cette dernière traversée par le câble faisant office de goupille et dont la tête moletée prend appui sur la face extérieur du boîtier de l'appareil pourvu d'une lumière assurant le passage de la tige filetée.

0057647

FIG.1

FIG. 2

## RAPPORT DE RECHERCHE EUROPEENNE

Office européen
des brevets

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | US - A - 3 092 827 (PEARCE)<br><br> * en entier * | 1,4 | B 60 Q 1/52 |
| A | DE - A - 1 903 054 (GEISS)<br><br> * en entier * | 1-4 | |
| A | FR - E - 65 779 (BOURGOIS ET CAILLE)<br><br> * en entier * | 1 | **DOMAINES TECHNIQUES RECHERCHES (Int. Cl. 3)** |
| A | DE - A - 2 345 844 (PANAJOT)<br><br> * en entier * | 1 | B 60 Q 1/52 |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 23-04-1982 | ONILLON |

OEB Form 1503.1  06.78